# EUROPEAN PATENT SPECIFICATION

(11) **EP 1 872 996 B1**
(45) Date of publication and mention of the grant of the patent: **19.05.2010**
(21) Application number: 07110747.8
(22) Date of filing: 21.06.2007
(51) Int. Cl.: B60K 15/03

(54) **FUEL TANK**
Kraftstoffbehälter
Réservoir de carburant

(30) Priority: 30.06.2006 JP 2006181769
(43) Date of publication of application: 02.01.2008
(73) Proprietor: HONDA MOTOR CO., LTD., Tokyo (JP)
(72) Inventor: Hosoya, Yukio c/o HONDA R&D CO., LTD., Saitama 351-0193 (JP); Suda, Tomokatsu c/o HONDA R&D CO., LTD., Saitama 351-0193 (JP); Maeda, Yasuyuki c/o HONDA R&D CO., LTD., Saitama 351-0193 (JP)
(74) Representative: Quinterno, Giuseppe

(56) References cited:
- DE-A- 19 825 104
- DE-A1- 10 214 900
- JP-A- 62 020 719
- JP-A- 2004 098 886
- JP-A- 2006 143 057
- US-A- 4 526 286
- US-A- 5 221 021
- US-A- 5 951 050
- US-A1- 2002 000 252
- US-A1- 2002 011 271
- US-A1- 2002 110 658
- US-B1- 6 260 542

## Description

The present invention relates to an improvement of a fuel tank of the kind defined in the preamble of claim 1.

A fuel tank of this kind is disclosed in DE-198 25 104 AI.

It is an object of the present invention to provide an improved fuel tank of the above-defined kind.

This object is achieved by a fuel tank according to claim 1.

A fuel tank according to claim 1 is formed by joining an upper tank half body and a lower tank half body which are respectively formed of a resin by integral molding, and a pump support portion which supports a fuel pump is integrally formed on an inner surface of at least one of the upper tank half body and the lower tank half body; a fuel outlet passage and an outer fuel discharge port connected thereto are integrally formed on the upper tank half body for discharging fuel to the outside of the fuel tank; a buffer plate which keeps an oil surface of fuel is integrally formed on the lower tank half body.

As to the manner of operation, when the buffer plate is provided as a part separate from the lower tank half body, the structure and parts for fixing the buffer plate to the lower tank half body become necessary. However according to the present invention, the structure and the parts for fixing the buffer plate to the lower tank half body become unnecessary.

The structure of the fuel tank is simplified thus reducing the number of parts.

According to claim 1 the pump support portion is integrally formed on an inner face of the lower tank half body.

As to the manner of operation, the pump support portion is integrally formed on the lower tank half body and hence, the structure of the fuel tank is simplified thus reducing the number of parts. Accordingly, the number of assembling steps of the fuel tank is also reduced.

Furthermore the upper tank half body is provided with a further pump support portion.

According to claim 1 the fuel pump is, in joining the upper tank half body and the lower tank half body to each other, assembled to the fuel tank by being sandwiched between the respective pump support portions.

As to the manner of operation, the fuel pomp is assembled when the upper tank half body and the lower tank half body are joined to each other and hence, it is unnecessary so particularly provide a step for fixing the fuel pump.

According to claim 2 the upper tank half body includes an oil supply port which is integrally formed with the upper tank half body.

As to the manner of operation, when the oil supply port is provided as a part separate from the upper tank half body, the structure and parts for fixing the oil supply port to the upper tank half body become necessary. However, according to the present invention, the structure and the parts for fixing the oil supply port to the upper tank half body become unnecessary.

According to claim 3 a fuel discharge port and a regulator support portion which supports a pressure regulator for adjusting a pressure of fuel to be discharged are integrally formed on the upper tank half body.

As the manner of operation, when the fuel discharge port and the regulator support portion are provided as parts separate from the upper tank half body, the structure and parts for fixing the fuel discharge port and the regulator support portion to the upper tank half body become necessary. However, according to the present invention, the structure and the parts for fixing the fuel discharge port and the regulator support portion to the upper tank half body become unnecessary.

Further, it is possible to arrange the fuel discharge port and the regulator support portion close to each other.

According to claim 4 in a fuel tank which is formed by joining an upper tank half body and a lower tank half body which are respectively formed of a resin by integrally moldingg, the further pump support portion is a pump support member which is formed as a part separate from the upper tank half body which supports a fuel pump is fixed to an inner surface of the upper tank half body, the pump support portion and the pump support member are engageable with each other, and a fuel passage is formed between the pump support member and the upper tank half body.

As the manner of operation, the fuel passage can be formed by joining the pump support member to the upper tank half body.

According to claim 5 a regulator support portion which supports a pressure regulator for adjusting a pressure of fuel to be discharged is mounted on the pump support member and, at the same time, the pressure regulator is made to face the fuel passage.

As the manner of operation, the pump support member is used as the fuel pump support member as well as the regulator support member. Further, the pressure regulator is made to face the fuel passage formed between the pump support member and another of the upper tank half body and the lower tank half body and hence, it is possible to effectively use the fuel passage without providing a new fuel passage.

The best mode for carrying out the present invention is explained hereinafter, in conjunction with attached drawings, wherein:
Fig. 1 is a side view of a motorcycle provided with a fuel tank according to the present invention;
Fig. 2 is a first cross -sectional view of a fuel tank (a first embodiment) of the present invention;
Fig. 3 is a second cross-sectional view of a fuel tank (a first embodiment) of the present invention;
Fig. 4 is an operational view showing an assembling method of a fuel tank (a first embodiment) of the present invention;
Fig. 5 is a cross-sectional view of an essential part showing a method for joining flanges of the fuel tank according to the present invention;
Fig. 6 is a cross-sectional view showing the support structure (second embodiment) of the fuel tank according to the present invention;
Fig. 7 is a side view of an essential part (second embodiment) showing the support structure of a pressure regulator according to the present invention;
Fig. 8 is a cross-sectional view of a fuel tank (third embodiment) according to the present invention; and
Fig. 9 is a cross-sectional view taken along a line 9-9 in Fig. 8.

Here, the drawings are assumed to be observed in the direction of symbols.

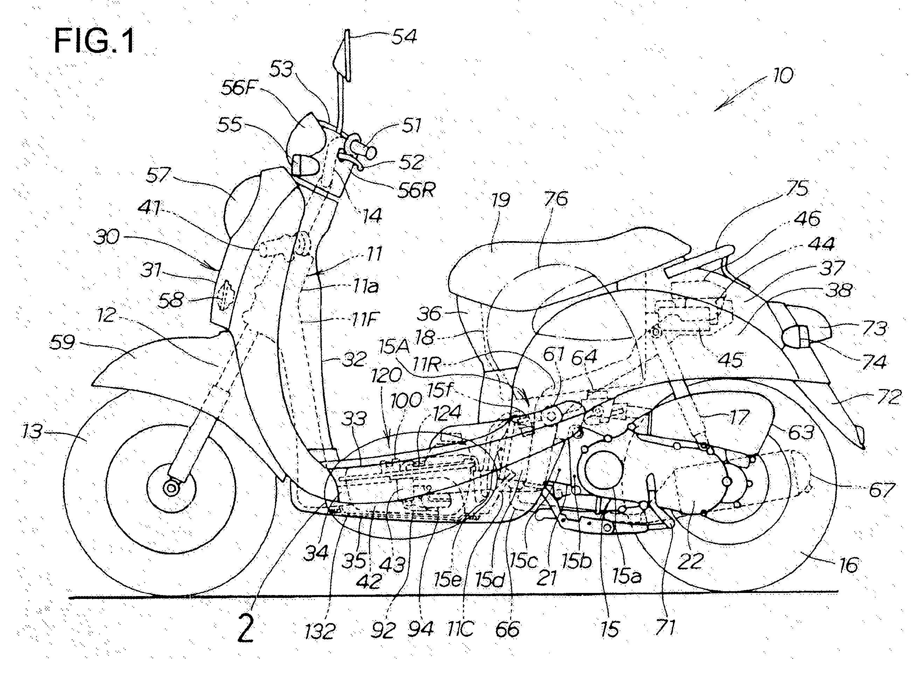

Fig. 1 is a side view of a motorcycle 10 provided with a fuel tank according to the present invention. The motorcycle 10 is a scooter-type vehicle which includes, as main parts thereof, a vehicle body frame 11, a front fork 12 which is mounted on a head pipe 11a of the vehicle body frame 11, a front wheel 13 which is mounted on the front fork 12, a handle 14 which is connected to the front fork 12, a unit swing engine 15 which is mounted on a rear portion of the vehicle body frame 11 in a vertically swingable manner, a rear wheel 16 which is mounted on a unit swing engine 15, a rear cushion unit 17 which mounts a rear end portion of the unit swing engine 15 thereon in a suspended manner, an accommodating box 18 which is mounted on an upper portion of a rear portion of the vehicle body frame 11, and a seat 19 which is arranged upwardly on the accommodating box 18 such that the seat 19 can be opened and closed.

The unit swing engine 15 includes a transmission case 15a, a crankcase 15b, a cylinder 15c, a cylinder head 15d, a head cover 15e, and an injector 15f which is mounted on a head-integral intake manifold which is integrally formed with the cylinder head 15d, wherein the cylinder 15c, the cylinder head 15d and the head cover 15e are components which constitute a cylinder portion 15A.

The vehicle body frame 11 is constituted by connecting a diecast front frame 11F which is integrally molded with the head pipe 11a and a diecast rear frame 11R by means of a connecting portion 11C.

The unit swing engine 15 is constituted of an engine 21 and a variable-speed transmission 22 having a centrifugal clutch. The engine 21 is a water-cooled 4-cycle-type engine which arranges the cylinder portion 15A thereof below an accommodating box 18 and behind a fuel tank 42 and is inclined in the substantially horizontal direction.

Further, the motorcycle 10 is configured such that the vehicle body frame 11 is covered with a body cover 30. The body cover 30 includes a front cover 31 which covers a front portion of a head pipe 11 a, a leg shield 32 which sandwiches the head pipe 11 a, covers a rear portion of the front cover 31 and also covers front portions of leg portions of a driver, a step floor 33 on which the driver places his or her feet, a pair of left and right floor side covers 34, 34 (only numeral 34 on the front side shown in the drawing) which extend downwardly from outer peripheries of the step floor 33, an under cover 35 which covers a space between lower peripheries of the left and right floor side covers 34, 34, a seat lower cover 36 which covers a front portion of the seat 19 from below, a rear cover 37 which covers a rear portion of the seat 19 from below and the rear wheel 16 from above, and a pair of left and right side covers 38, 38 (only numeral 38 on the front side shown in the drawing).

Still further, in such a motorcycle 10, a main switch 41 is arranged at an upper portion of the leg shield 32, a fuel tank 42 (incorporating a fuel pump 43 therein) is arranged below the step floor 33, and a tray not shown in the drawing is formed on an upper end portion of the rear portion of the vehicle body frame 11. Further, a reserve tank 44 for radiator, a battery 45 and a control unit 46 are arranged on the tray.

In the drawing, numeral 51 indicates a handle grip, numeral 52 indicates a left brake lever, numeral 53 indicates a meter panel, numeral 54 indicates a mirror, numerals 55, 55 (only numeral 55 on the front side shown in the drawing) indicate a pair of left and right front blinkers, numeral 56F indicates a front-side handle cover, numeral 56R indicates a rearside handle cover, numeral 57 indicates a head lamp, numeral 58 indicates a horn which is disposed in the inside of the front cover 31 , numeral 59 indicates a front fender which covers an upper portion of the front wheel 13, numerals 61, 61 (only numeral 61 on the front side shown in the drawing) indicate a pair of left and right engine hangers, numeral 63 indicates an air cleaner which is provided at the left side of the vehicle body, numeral 64 indicates a throttle body, numeral 66 indicates an exhaust pipe which is connected to a lower portion of the cylinder head 15d, numeral 67 indicates a muffler which is connected to the rear end of the exhaust pipe 66, numeral 71 indicates a main stand, numeral 72 indicates a rear fender, numeral 73 indicates a tail lamp, numerals 74, 74 (only numeral 74 on the front side shown in the drawing) indicate rear blinkers, numeral 75 indicates a carrier, and numeral 76 indicates a helmet.

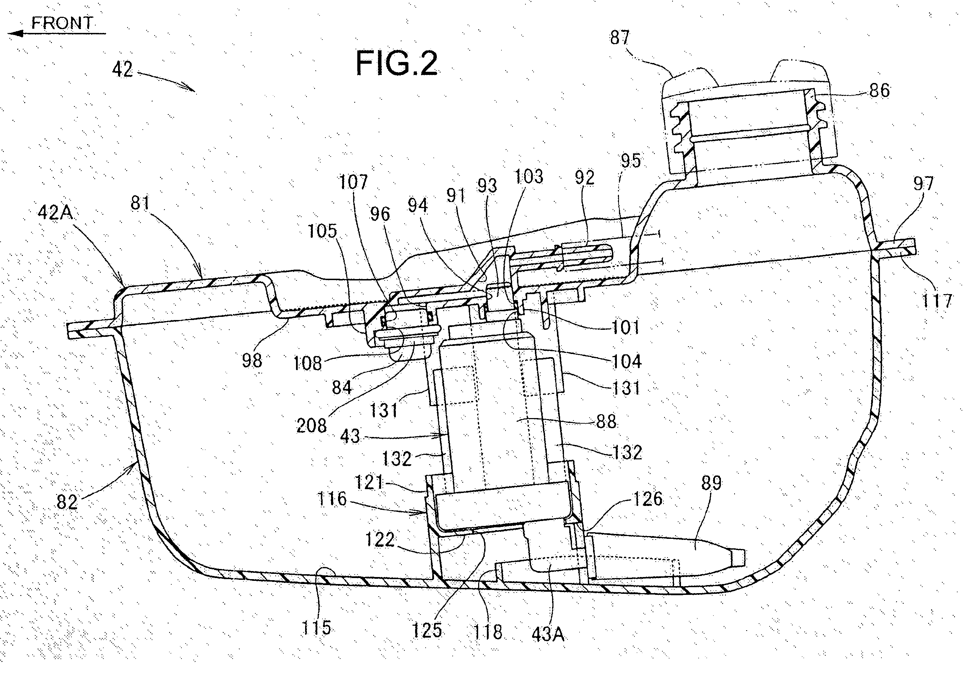

Fig. 2 is a first cross-sectional view (an arrow (FRONT) in the drawing indicating a front portion of the vehicle, the same definition applicable hereinafter) of the fuel tank (first embodiment) according to the present invention. The fuel tank 42 is constituted of a resin-made upper tank half body 81, a resin-made lower tank half body 82 which is joined to the upper tank half body 81 using an adhesive agent, the fuel pump 43 and a residual quantity meter unit (not shown in the drawing) which are supported on the upper tank half body 81 and the lower tank half body 82, a pressure regulator 84 which is supported on the upper tank half body 81 for adjusting the pressure of fuel to be discharged to the outside, and a filler cap 87 which closes a fuel supply port 86 integrally formed in the upper tank half body 81.

The upper tank half body 81 and the lower tank half body 82 are members for constituting the tank body 42A as a vessel.

The fuel pump 43 is constituted of a pump body portion 88, a pump discharge port 93 which projects upwardly from the pump body portion 88 and functions as a fuel discharge port, and a strainer 89 which is connected to an intake port 43A for sucking fuel into the inside of the fuel pump 43 and functions as a filter.

The upper tank half body 81 integrally includes, as a fuel outlet passage, a fuel passage 91 which is formed on a center portion thereof, an outer discharge port 92 which is connected to the fuel passage 91 for discharging fuel to the outside of the fuel tank 42, a discharge port insertion hole 94 into which a pump discharge port 93 of the fuel pump 43 is inserted and which is opened to the fuel passage 91, a regulator insertion hole 96 into which a portion of the pressure regulator 84 is inserted and which is formed to make the pressure regulator 84 to face the fuel passage 91, a flange 97 which is formed on a peripheral portion of the regulator insertion hole 96 as a connection portion with the lower tank half body 82, and the above-mentioned oil supply port 86. Here, numeral 95 indicates a fuel pipe which connects the outer discharge port 92 and an injector 15f (see Fig. 1) of the engine 21 (see Fig. 1).

The discharge insertion hole 94 is opened in a bottom of a first cylindrical portion 101 which projects downwardly from an inner surface 98. Here, numeral 103 indicates an O ring which seals a gap between an inner surface 104 of the first cylindrical portion 101 and the pump discharge port 93 of the fuel pump 43.

The regulator insertion hole 96 is opened in a bottom of a second cylindrical portion 105 which projects downwardly from the inner surface 98. Here, numeral 107 indicates an O ring which seals a gap between an inner surface 108 of the second cylindrical portion 105 and the regulator insertion hole 96.

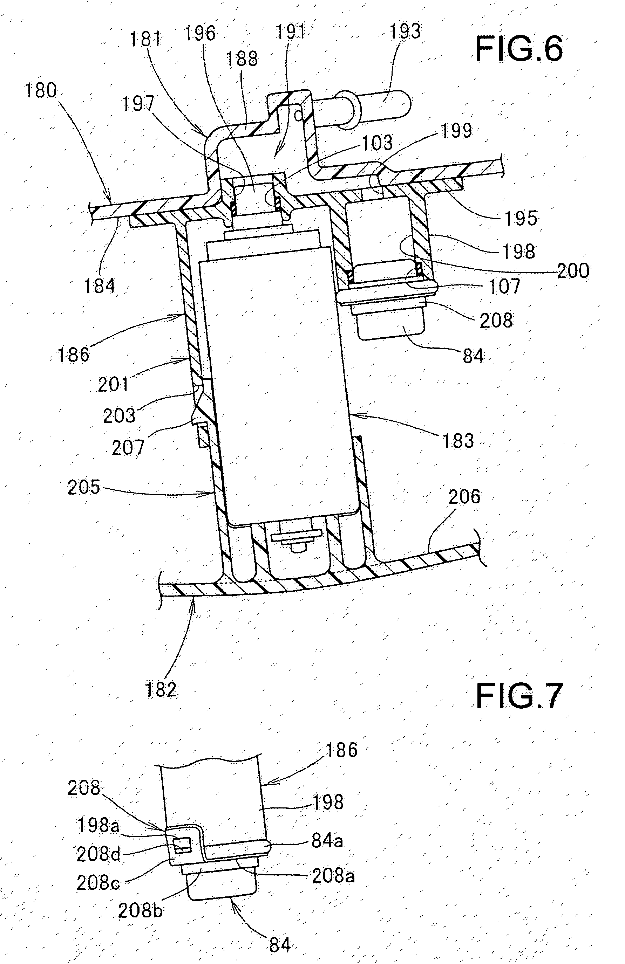

The pressure regulator 84 is mounted on the second cylindrical portion 105 using a pressure plate 208 described in detail in conjunction with Fig. 7.

The above-mentioned discharge insertion hole 94 is a pump support portion which supports an upper portion (pump discharge port 93) of the fuel pump 43, and the regulator insertion hole 96 is a regulator support portion which supports the pressure regulator 84.

The lower tank half body 82 integrally includes a pump support portion 116 which is formed on an inner surface 115 thereof in a projecting manner for supporting a lower portion of the fuel pump 43 on a center portion of the lower tank half body 82, a flange 117 which is formed on a peripheral portion of the lower tank half body 82 as a joining portion with the upper tank half body 81, and a buffer plate 118 which surrounds a front half portion of the strainer 89 and is formed on the inner surface 115 of the lower tank half body 82 in a projecting manner.

The pump support portion 116 is formed of a cylindrical portion 121 and an intermediate step portion 122 which is formed at a position substantially half a height of the cylindrical portion 121. A lower portion of the fuel pump 43 is supported on an upper portion of the cylindrical portion 121 and the intermediate step portion 122. Here, numerals 125, 126 indicate opening portions which allow the strainer 89 to pass therethrough when the fuel pump 43 is mounted on the pump support portion 116.

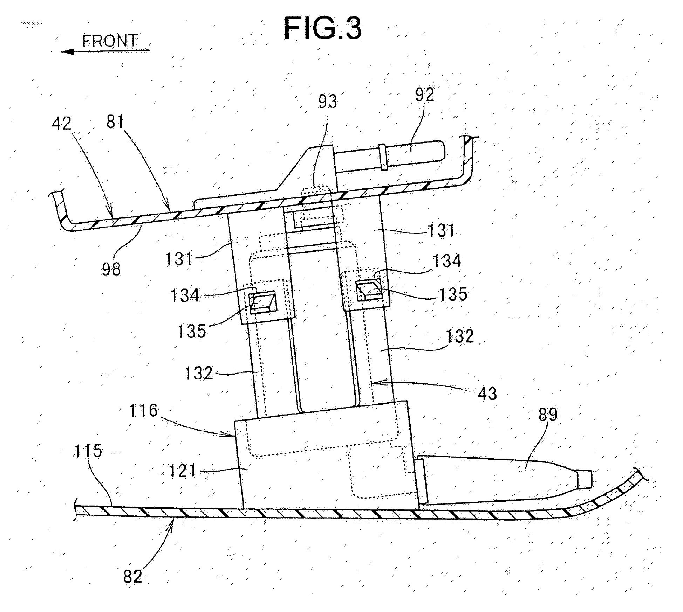

Fig. 3 is a second cross-sectional view of the fuel tank (the first embodiment) according to the present invention. The second cross-sectional view is a cross-sectional view taken at a position away from the center portion of the fuel tank 42 in the vehicle width direction with respect to the cross-sectional view of the center portion of the fuel tank 42 shown in Fig. 2.

The upper tank half body 81 integrally includes a plurality of downwardly projecting portions 131 which projects downwardly from the inner surface 98, and the lower tank half body 82 integrally includes a plurality of upwardly projecting portions 132 which projects upwardly from the cylindrical portion 121 and is joined to the downwardly projecting portions 131 of the upper tank half body 81.

The lower projecting portions 131 form rectangular holes 134 in distal end portions thereof, the upwardly projecting portions 132 form hook portions 135 which are engaged with and joined to the rectangular holes 134 on distal end portions thereof.

The joining of the above-mentioned rectangular holes 134 and the hook portions 135 is performed when the upper tank half body 81 and the lower tank half body 82 are mated with and joined to each other. In this manner, by joining the hook portions 135 to the rectangular holes 134, the center portion of the fuel tank 42 is hardly deflected thus enhancing the rigidity of the fuel tank 42.

Next, the manner of assembling the above-mentioned fuel tank 42 is explained.

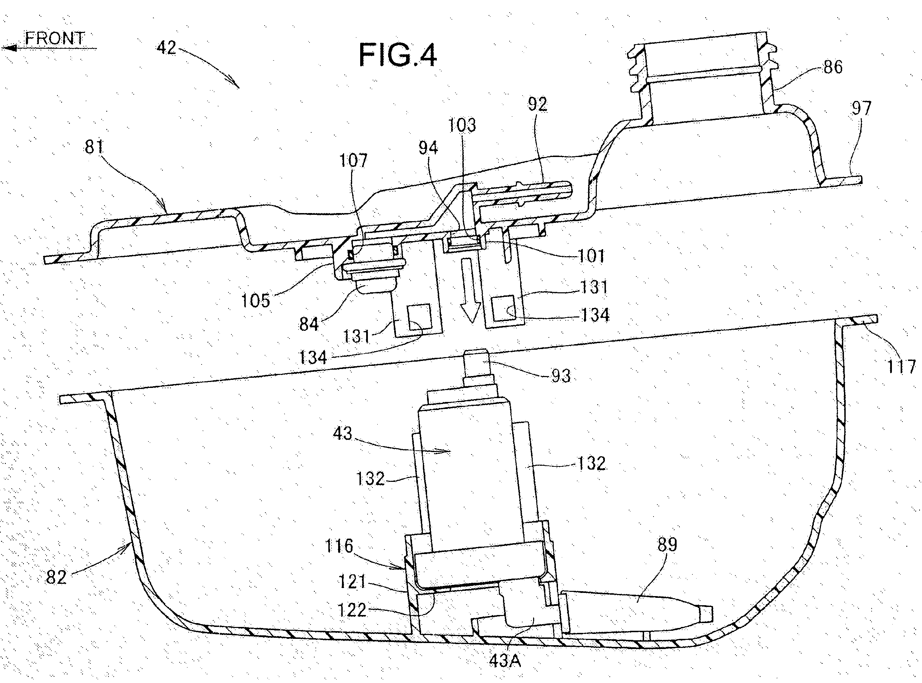

Fig. 4 is an operational view showing the manner of assembling the fuel tank (the first embodiment) according to the present invention.

First of all, the O-ring 103 is fitted in the first cylindrical portion 101 of the upper tank half body 81, the O ring 107 is fitted in an O-ring groove which is formed in the second cylindrical portion 105 and, at the same time, the pressure regulator 84 is inserted into the second cylindrical portion 105, and the fuel pump 43 is mounted on the pump support portion 116 of the lower tank half body 82.

Further, as indicated by a blanked arrow, the upper tank half body 81 is mounted on the lower tank half body 82 from above, the pump discharge port 93 of the fuel pump 43 is fitted in the discharge port insertion hole 94 and, at the same time, the rectangular opening 134 of the downwardly projecting portion 131 and the hook portion 135 (see Fig. 3) of the upwardly projecting portion 132 are joined to each other, the flange 97 of the upper tank half body 81 and the flange 117 of the lower tank half body 82 are mated with each other and are joined to each other. Due to the above-mentioned operations, the assembling of the fuel tank 42 is completed.

As described above, in the step in which the upper tank half body 81 and the lower tank half body 82 are joined to each other, by sandwiching the upper portion and the lower portion of the fuel pump 42, the fuel tank 42 can be fixed and hence, a particular step for fixing the fuel tank 42 becomes unnecessary.

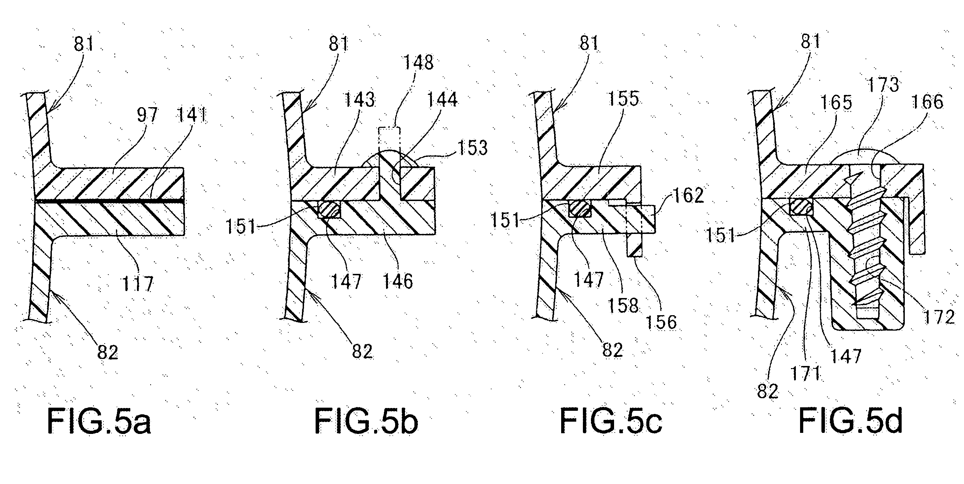

Fig. 5(a) to Fig. 5(d) are cross-sectional views of an essential part showing a method for joining the flanges of the fuel tank according to the present invention, wherein Fig. 5(a) shows the first embodiment shown in Fig. 2, and Fig. 5(b) to Fig. 5(d) show other embodiments.

Fig. 5(a) shows a state in which the flange 97 and the flange 117 are adhered to each other by an adhesive agent 141.

Fig. 5(b) shows a state in which a through hole 144 is preliminarily formed in the flange 143, an O-ring groove 147 and a projecting portion 148 are formed on the flange 146, an O-ring 151 is fitted in the O-ring groove 147, the projecting portion 148 is inserted into the through hole 144, and thermal caulking is applied to a distal end of the projecting portion 148 by softening the distal end of the projecting portion 148 with heat. Numeral 153 indicates a thermal caulked portion.

Fig. 5(c) shows a state in which a hook portion 156 is preliminarily formed on a peripheral portion of the flange 155, the O-ring groove 147 and a portion to be joined 162 are formed on the flange 158, an O-ring 151 is fitted in the O-ring groove 147, and the hook portion 156 is replaceably engaged with the portion to be joined 162 thus detachably joining the hook portion 156 and the portion to be joined 162.

As described above, by detachably joining the hook portion 156 and the portion to be joined 162, the upper tank half body 81 and the lower tank half body 82 can be separated from each other thus facilitating the maintenance of the fuel pump incorporated in the fuel tank.

Fig. 5(d) shows a state in which a small bolt insertion hole 166 is preliminarily formed in a flange 165, an O-ring groove 147 and a small bolt mounting hole 172 are formed in a flange 171, an O-ring 151 is mounted in the O ring groove 147, a small bolt 173 is inserted into the small bolt insertion hole 166 and, at the same time, the small bolt 173 is threaded into the small bolt mounting hole 172 and hence, the flange 165 and the flange 171 are fastened to each other thus detachably joining the flange 165 and the flange 171.

Also in this embodiment, the upper tank half body 81 and the lower tank half body 82 can be separated from each other thus facilitating the maintenance of the fuel pump incorporated in the fuel tank.

As explained heretofore in conjunction with Fig. 2 and Fig. 4, , in the fuel tank 42 which is formed by joining the upper tank half body 81 and the lower tank half body 82 which are respectively formed of a resin by integral molding, the discharge port insertion hole 94 and the pump support portion 116 which constitute the pump support portion for supporting the fuel pump 43 are integrally formed on the respective inner surfaces 98, 115 of the upper tank half body 81 and the lower tank half body 82.

Due to such a constitution, it is possible to simplify the structure of the fuel tank 42 thus reducing the number of parts. Accordingly, it is possible to reduce the number of assembling steps of the fuel tank 42 thus realizing the reduction of cost of the fuel tank 42.

Furthermore the fuel pump 43 is, when the upper tank half body 81 and the lower tank half body 82 are joined to each other, assembled to the fuel tank 42 in a state that the fuel pump 43 is sandwiched between the discharge port insertion hole 94 and the pump support portion 116.

Due to such a constitution, in the step in which the upper tank half body 81 and the lower tank half body 82 are joined to each other, by sandwiching the fuel pump 43 using the pump support portions which are respectively formed on the upper tank half body 81 and the lower tank half body 82, the fuel pump can be fixed and hence, the particular structure or step for fixing the fuel pump 43 become unnecessary thus simplifying the structure of the fuel tank 42 and enhancing the productivity of the fuel tank 42.

Furthermore the upper tank half body 81 includes the oil supply port 86 which is integrally formed with the upper tank half body 81.

Due to such a constitution, the structure and the parts for fixing the oil supply port 86 become unnecessary and hence, it is possible to reduce the number of parts of the fuel tank 42 thus realizing the reduction of cost of the fuel tank 42.

Furthermore the outer discharge port 92 which discharges the fuel to the outside and the regulator insertion hole 96 which constitutes the regulator support portion for supporting the pressure regulator 84 which adjusts the pressure of fuel to be discharged are integrally formed on the upper tank half body 81.

Due to such a constitution, the structure and the parts for fixing the outer discharge port 92 and the regulator insertion hole 96 (that is, the second cylindrical portion 105) become unnecessary. Accordingly, it is possible to reduce the number of parts of the fuel tank 42 and hence, the reduction of cost of the fuel tank 42 can be realized.

Further, it is possible to arrange the outer discharge port 92 and the regulator insertion hole 96 close to each other and hence, the resistance in the passage from the outer discharge port 92 to the pressure regulator 84 can be reduced.

Furthermore the buffer plate 118 which keeps the oil surface of fuel is integrally formed on the lower tank half body 82.

Due to such a constitution, the structure and the parts for fixing the buffer plate 118 to the lower tank half body 82 become unnecessary. Accordingly, it is possible to reduce the number of parts as well as the number of assembling steps of the fuel tank 42 and hence, the reduction of cost of the fuel tank 42 can be realized.

Fig. 6 is a cross-sectional view of the support structure of the fuel tank (second embodiment) according to the present invention.

A fuel tank 180 includes a resin-made upper tank half body 181, a resin-made lower tank half body 182 which is joined to the upper tank half body 181 by an adhesive agent, a fuel pump 183 incorporated in the fuel tank 180, a pump support member 186 which is mounted on an inner surface 184 of the upper tank half body 181 for supporting an upper portion of the fuel pump 183, and a pressure regulator 84.

The upper tank half body 181 is a member provided for forming, as a fuel outlet passage, a fuel passage 191, wherein the upper tank half body 181 forms a projection portion 188 which is projected upwardly on a center portion thereof, and mounts the pump support member 186 on a lower portion of the projection portion 188. Here, numeral 193 indicates an outer discharge port which is integrally formed with the upper tank half body 181 to be communicated with the fuel passage 191.

The pump support member 186 is constituted of a flat portion 195 which is adhered to an inner surface 184 of the upper tank half body 181 by an adhesive agent, a discharge port insertion hole 197 which is formed in the flat portion 195 to be communicated with the fuel passage 191 and into which a pump discharge port 196 of the fuel pump 183 is inserted, a cylindrical portion 198 which is projected from the flat portion 195, and a downwardly projecting portion 201.

The cylindrical portion 198 is a part in which a regulator insertion hole 200 is formed, wherein a portion of the pressure regulator 84 is inserted into the regulator insertion hole 200 and, at the same time, the regulator insertion hole 200 allows the pressure regulator 84 to face the fuel passage 191 by way of a communication hole 199.

The downwardly projecting portion 201 is a part which forms a rectangular hole 203 in a distal end portion thereof.

The lower tank half body 182 is a member in which a pump support portion 205 for supporting a lower portion of the fuel pump 183 is integrally formed on an inner surface 206 in an upwardly projecting manner.

The pump support portion 205 is a part which forms a hook portion 207 on a distal end thereof, wherein the hook portion 207 is engaged with and is joined to the rectangular hole 203.

As described above, by joining the pump support member 186 which is provided as a body separate from the upper tank half body 181 to the inner surface 184 of the upper tank half body 181, it is possible to freely design a shape of the fuel passage 191 using the upper tank half body 181 and the pump support member 186 thus increasing the degree of freedom in designing the fuel passage 191.

Fig. 7 is a side view (the second embodiment) of an essential part showing the support structure of the pressure regulator according to the present invention. Fig. 7 shows a state in which the pressure regulator 84 is mounted on the cylindrical portion 198 of the pump support member 186 using a pressure plate 208.

The pressure plate 208 is an integrally formed product constituted of an annular plate portion 208a, a cylindrical portion 208b which is raised from an inner peripheral portion of the annular plate portion 208a, and a pair of joining members 208c, 208c (in the drawing, showing only the one-side joining member indicated by symbol 208c) which is formed by bending the annular plate portion 208a.

The joining members 208c, 208c include rectangular holes 208d, 208d (in the drawing, showing only the one-side rectangular hole indicated by symbol 208d) with which hook portions 198a, 198a (in the drawing, showing only the one-side hook portion indicated by symbol 198a) formed on a side surface of the cylindrical portion 198 are engaged.

To assemble the pressure regulator 84 to the cylindrical portion 198, first of all, an upper portion of the pressure regulator 84 is inserted into the regulator insertion hole 200 (see Fig. 6) of the cylindrical portion 198 and, next, a cylindrical portion 208b of the pressure plate 208 is fitted in a lower portion of the pressure regulator 84 from below and, at the same time, the annular plate portion 208a is brought into contact with a lower portion of a large diameter portion 84a of the pressure regulator 84. Thereafter, the rectangular holes 208d, 208d of the pressure plate 208 are engaged with the hook portions 198a, 198a of the cylindrical portion 198.

As has been explained in conjunction with in Fig. 6,in the fuel tank 180 which is formed by joining the upper tank half body 181 and the lower tank half body 182 which are respectively formed of a resin by integrally molding, the pump support portion 205 which supports the fuel pump 183 is integrally formed on the inner surface 206 of the lower tank half body 182, the pump support member 186 which supports the fuel pump 183 and is formed as a body separate from another tank half body is fixed to the upper tank half body, the pump support portion 205 and the pump support member 186 are engageable with each other, and the fuel passage 191 is formed between the pump support member 186 and the upper tank half body 181.

Due to such a constitution, it is possible to simplify the structure of the fuel tank 180 thus reducing the number of parts of the fuel tank 180. Accordingly, it is also possible to reduce the number of assembling steps of the fuel tank 180 and hence, the reduction of cost of the fuel tank 180 can be realized.

Further, by mating the pump support member 186 with the upper tank half body 181, the fuel passage 191 can be easily formed.

As has been explained heretofore in conjunction with Fig. 6 and Fig. 7, the regulator insertion hole 200 which constitutes the regulator support portion for supporting the pressure regulator 84 which adjusts the pressure of fuel to be discharged is mounted on the pump support member 186 and, at the same time, the pressure regulator 84 is made to face the fuel passage 191.

Due to such a constitution, it is possible to use the pump support member 186 as the support member of the fuel pump 183 and also as the support member of the pressure regulator 84 thus reducing the number of parts.

Further, the pressure regulator 84 is made to face the fuel passage 191 formed between the pump support member 186 and the upper tank half body 181 and hence, it is possible to effectively make use of the fuel passage 191 without providing a new fuel passage. Accordingly, the reduction of cost of the fuel tank 180 can be realized.

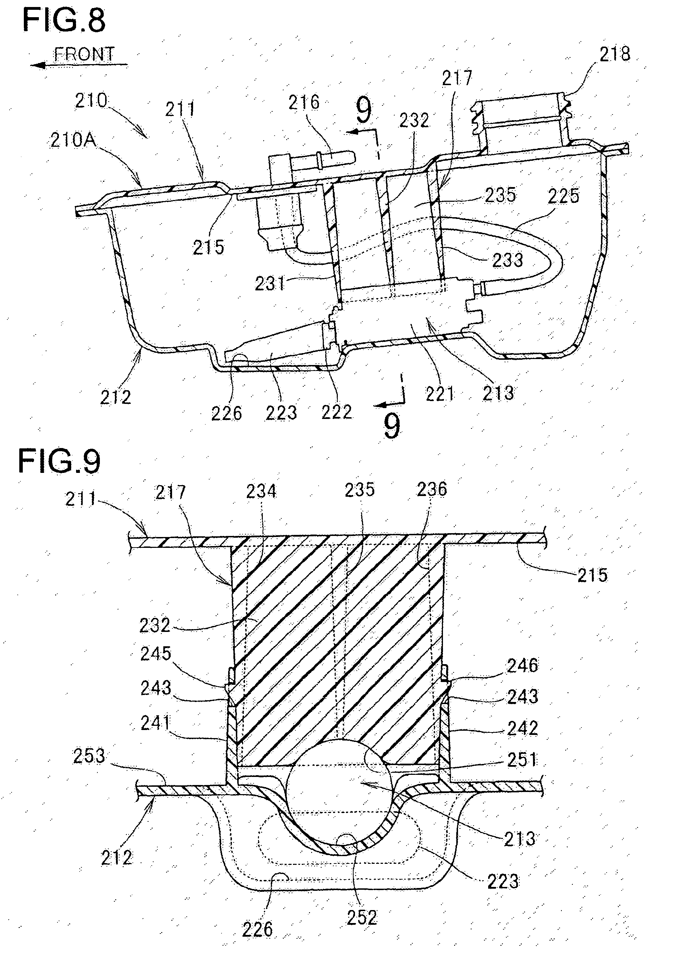

Fig. 8 is a cross-sectional view of the fuel tank (third embodiment) according to the present invention. A fuel tank 210 includes a resin-made upper tank half body 211, a resin-made lower tank half body 212 which is joined to the upper tank half body 211 by an adhesive agent, and a fuel pump 213 which is supported on the upper tank half body 211 and the lower tank half body 212.

The above-mentioned upper tank half body 211 and the lower tank half body 212 are parts which form a tank body 210A.

The upper tank half body 211 is integrally formed of a fuel discharge port 216 from which fuel is discharged, a downwardly projecting portion 217 which is projected downwardly from an inner surface 215 of the upper tank half body 211 for supporting an upper portion of the fuel pump 213, and an oil supply port 218.

The fuel pump 213 is constituted of a pump body 221 and a strainer 223 which is mounted in a fuel inlet port 222 of the pump body 221. Here, numeral 225 indicates a fuel tube which connects a discharge port 216 and the pump body 221, numeral 226 indicates a recessed portion which is formed in the lower tank half body 212 for arranging the strainer 223 therein.

The downwardly projecting portion 217 is formed of a first plate portion 231, a second plate portion 232 and a third plate portion 233 which are respectively arranged in a spaced-apart manner from each other, and a fourth plate portion 234 (not shown in the drawing), a fifth plate portion 235 and a sixth plate portion 236 (not shown in the drawing) which connect the first plate portion 231, the second plate portion 232 and the third plate portion 233 to each other and, at the same time, are respectively arranged in a spaced-apart manner.

Fig. 9 is a cross-sectional view taken along a line 9-9 in Fig. 8, wherein the lower tank half body 212 includes plate-shaped upwardly projecting portions 241, 242 which are projected upwardly, and these upwardly projecting portions 241, 242 form hole portions 243 on respective distal ends thereof.

The first plate portion 231 (not shown in the drawing), the second plate portion 232, the third plate portion 233 (not shown in the drawing) of the downwardly projecting portion 217 are parts each of which form hook portions 245, 246 which projects sideward on both surfaces thereof, and these hook portions 245, 246 are joined to respective hole portions 243 formed in the upwardly projecting portions 241, 242. Here, numeral 251 indicates arcuate recessed portions which are formed on respective lower ends of the first plate portion 231, the second plate portion 232 and the third plate portion 233 for supporting an upper portion of the fuel pump 213, numeral 252 indicates an arcuate groove portion formed in the lower tank half body 212 for supporting a lower portion of the fuel pump 213 such that an inner surface 253 of the lower tank half body 212 is formed in an arcuate shape.

Here, in this embodiment, as shown in Fig. 6, the pump support member 186 is mounted on the inner surface 184 of the upper tank half body 181. However, the present invention is not limited to the above-mentioned embodiment and, for example, the fuel pump support portion may be mounted on the upper tank half body and a member which forms the fuel passage may be formed on an outer surface of the upper tank half body.

The fuel tank of the present invention is preferably applicable to a motorcycle.

Main reference numerals and signs
10... motorcycle;
42, 180,210... fuel tank;
43, 183, 213... fuel pump;
81, 181, 211... upper tank half body;
82, 182, 212... lower tank half body;
84... pressure regulator;
86, 218... oil supply port;
91, 191... fuel passage;
92, 216... discharge port;
94, 116, 197, 205... pump support portion;
96, 200... regulator support portion (regulator inserting hole);
98, 115, 184, 206, 215, 253... inner surface;
118... buffer plate;
186... pump support member.

## Claims

1. A fuel tank (42; 180; 210) which is formed by joining an upper tank half body (81; 181; 211) and a lower tank half body (82; 182; 212) which are respectively formed of a resin by integral molding, with a fuel pump (43; 183; 213), and a pump support portion (116; 205; 252) which supports the fuel pump (43; 183; 213) and which is integrally formed on an inner surface of the lower tank half body (82; 182; 212), wherein a fuel outlet passage (91; 191) and an outer fuel discharge port (92; 193) connected to said passage (91; 191) are integrally formed on the upper tank half body (81; 181), for discharging fuel to the outside of the fuel tank (42; 180; 210);
**characterized in that** the upper tank half body (81; 181; 211) is provided with a further pump support portion (94; 197; 217), and **in that** said pump support portions (94, 116; 197, 205; 217, 252) are configured such that the fuel pump (43; 183; 213) is, in joining the upper tank half body (81; 181; 211) and the lower tank half body (82; 182; 212) to each other, assembled to the fuel tank (42; 180; 210) by being sandwiched between the respective pump support portions (94, 116; 197, 205; 217, 252).

2. A fuel tank according to claim 1, wherein the upper tank half body (81; 181; 211) includes an oil supply port (86; ...; 218) which is integrally formed with the upper tank half body (81; 181; 211).

3. A fuel tank according to claim 1 or claim 2, wherein a fuel discharge port (92; ...; 216) and a regulator support portion (96; ...; 200) which supports a pressure regulator (84) for adjusting a pressure of fuel to be discharged are integrally formed on the upper tank half body (81; 181; 211).

4. A fuel tank according to claim 1, wherein the further pump support portion is a pump support member (186) which is formed as a part separate from the upper tank half body which supports the fuel pump (183) is fixed to an inner surface (184) of the upper tank half body (181), the pump support portion (205) and the pump support member (186) are engageable with each other, and a fuel passage (191) is formed between the pump support member (186) and the upper tank half body (881).

5. A fuel tank according to claim 4, wherein a regulator support portion (200) which supports a pressure regulator (84) for adjusting a pressure of fuel to be discharged is mounted on the pump support member (186) and, at the same time, the pressure regulator (48) is made to face the fuel passage (191).

6. A fuel tank (42, 210) according to claim 1, wherein said further pump support portion (94, 217) is integrally formed on the inner surface of the upper tank half body (81; 211).

## Patentansprüche

1. Kraftstofftank (42; 180; 210), der durch Verbindung eines oberen Tank-Halbkörpers (81; 181; 211) und eines unteren Tank-Halbkörpers (82; 182; 212) gebildet wird, die jeweils durch integrales Formen aus einem Harz gebildet werden, mit einer Kraftstoffpumpe (43; 183; 213) und einem Pumpentragteil (116; 205; 252), das die Kraftstoffpumpe (43; 183; 213) trägt und an einer Innenfläche des unteren Tank-Halbkörpers (82; 182; 212) angeformt ist, wobei ein Kraftstoffaustrittsdurchgang (91; 191) und eine mit dem Durchgang (91; 191) verbundene äußere Kraftstoffaustrittsöffnung (92; 193) am oberen Tank-Halbkörper (81; 181) angeformt sind, um Kraftstoff aus dem Kraftstofftank (42; 180; 210) heraus abzugeben;
**dadurch gekennzeichnet, dass** der obere Tank-Halbkörper (81; 181; 211) mit einem weiteren Pumpentragteil (94; 197; 217) versehen ist und dass die Pumpentragteile (94, 116; 197, 205; 217, 252) so konfiguriert sind, dass die Kraftstoffpumpe (43; 183; 213) beim Verbinden des oberen Tank-Halbkörpers (81; 181; 211) mit dem unteren Tank-Halbkörper (82; 182; 212) am Kraftstofftank (42; 180; 210) angefügt wird, indem sie in SandwichAnordnung zwischen den jeweiligen Pumpentragteilen (94, 116; 197, 205; 217, 252) eingefügt wird.

2. Kraftstofftank gemäß Anspruch 1, wobei der obere Tank-Halbkörper (81; 181; 211) eine Ölzufuhröffnung (86; ...; 218) umfasst, die im oberen Tank-Halbkörper (81; 181; 211) integriert ist.

3. Kraftstofftank gemäß Anspruch 1 oder Anspruch 2, wobei eine Kraftstoffaustrittsöffnung (92; ...; 216) und ein Reglertragteil (96; ...; 200), das einen Druckregler (84) zum Einstellen eines Drucks des abzugebenden Kraftstoffs trägt, am oberen Tank-Halbkörper (81; 181; 211) angeformt sind.

4. Kraftstofftank gemäß Anspruch 1, wobei das weitere Pumpentragteil ein Pumpentragelement (186) ist, das als vom die Kraftstoffpumpe (183) tragenden oberen Tank-Halbkörper getrenntes Teil geformt ist und an einer Innenfläche (184) des oberen Tank-Halbkörpers (181) befestigt ist, das Pumpentragteil (205) und das Pumpentragelement (186) miteinander in Eingriff bringbar sind und ein Kraftstoffdurchgang (191) zwischen dem Pumpentragelement (186) und dem oberen Tank-Halbkörper (181) gebildet ist.

5. Kraftstofftank gemäß Anspruch 4, wobei ein Reglertragteil (200), das einen Druckregler (84) zum Einstellen eines Drucks des abzugebenden Kraftstoffs trägt, am Pumpentragelement (186) montiert ist und der Druckregler (48) zugleich dazu gebracht wird, dem Kraftstoffdurchgang (191) zugewandt zu sein.

6. Kraftstofftank (42, 210) gemäß Anspruch 1, wobei das weitere Pumpentragteil (94, 217) an der Innenfläche des oberen Tank-Halbkörpers (81; 211) angeformt ist.

## Revendications

1. Réservoir de carburant (42 ; 180 ; 210) qui est formé en réunissant un demi-corps supérieur de réservoir (81 ; 181 ; 211) et un demi-corps inférieur de réservoir (82 ; 182 ; 212) qui sont formés respectivement d'une résine par moulage intégral, avec une pompe à carburant (43 ; 183 ; 213), et une portion formant support de pompe (116 ; 205 ; 252) qui supporte la pompe à carburant (43 ; 183 ; 213) et qui est formée d'une seule pièce sur une surface interne du demi-corps inférieur de réservoir (82 ; 182 ; 212), dans lequel un passage de sortie du carburant (91 ; 191) et un orifice externe de décharge du carburant (92 ; 193) raccordé audit passage (91 ; 191) sont formés d'une seule pièce sur le demi-corps supérieur de réservoir (81 ; 181), pour décharger du carburant à l'extérieur du réservoir de carburant (42 ; 180 ; 210) ; **caractérisé en ce que** le demi-corps supérieur de réservoir (81 ; 181 ; 211) est doté d'une autre portion formant support de pompe (94 ; 197 ; 217), et **en ce que** lesdites portions formant supports de pompe (94, 116 ; 197, 205 ; 217, 252) sont configurées de telle sorte que la pompe à carburant (43 ; 183 ; 213) est, en réunissant le demi-corps supérieur de réservoir (81 ; 181 ; 211) et le demi-corps inférieur de réservoir (82 ; 182 ; 212) l'un à l'autre, assemblée au réservoir de carburant (42 ; 180 ; 210) en étant prise en sandwich entre les portions formant supports de pompe respectives (94, 116 ; 197, 205 ; 217, 252).

2. Réservoir de carburant selon la revendication 1, dans lequel le demi-corps supérieur de réservoir (81 ; 181 ; 211) comprend un orifice d'alimentation en huile (86 ; ... ; 218) qui est formé d'une seule pièce avec le demi-corps supérieur de réservoir (81 ; 181 ; 211).

3. Réservoir de carburant selon la revendication 1 ou la revendication 2, dans lequel un orifice de décharge du carburant (92 ; ... ; 216) et une portion formant support de régulateur (96 ; ... ; 200) qui supporte un régulateur de pression (84) pour ajuster une pression du carburant devant être déchargé sont formés d'une seule pièce sur le demi-corps supérieur de réservoir (81 ; 181 ; 211).

4. Réservoir de carburant selon la revendication 1, dans lequel l'autre portion formant support de pompe est un élément formant support de pompe (186), qui est formé en tant que partie distincte du demi-corps supérieur de réservoir qui supporte la pompe à carburant (183), est fixée à une surface interne (184) du demi-corps supérieur de réservoir (181) la portion formant support de pompe (205) et l'élément formant support de pompe (186) pouvant s'engager l'un avec l'autre, et un passage de carburant (191) est formé entre l'élément formant support de pompe (186) et le demi-corps supérieur de réservoir (181).

5. Réservoir de carburant selon la revendication 4, dans lequel une portion formant support de régulateur (200), qui supporte un régulateur de pression (84) pour ajuster une pression de carburant devant être déchargé, est montée sur l'élément formant support de pompe (186) et, au même moment, le régulateur de pression (48) est réalisé pour faire face au passage de carburant (191).

6. Réservoir de carburant (42, 210) selon la revendication 1, dans lequel ladite autre portion formant support de pompe (92, 217) est formée d'une seule pièce sur la surface interne du demi-corps supérieur de réservoir (81 ; 211).
